(19)

Europäisches
Patentamt

European
Patent Office

Office européen
des brevets

(11) **EP 3 156 508 A1**

(12) **EUROPEAN PATENT APPLICATION**

(43) Date of publication:
**19.04.2017 Bulletin 2017/16**

(51) Int Cl.:
*C22B 7/00* (2006.01)        *C22B 7/04* (2006.01)

(21) Application number: **15190176.6**

(22) Date of filing: **16.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicants:
• **VITO NV
2400 Mol (BE)**
• **Universiteit Antwerpen
2000 Antwerpen (BE)**

(72) Inventors:
• **Spooren, Jeroen
B-2400 Mol (BE)**
• **Horckmans, Liesbeth
B-2400 Mol (BE)**
• **Kim, EUN-Young
B-2400 Mol (BE)**

(74) Representative: **Paemen, Liesbet R.J. et al
De Clercq & Partners
Edgard Gevaertdreef 10 a
9830 Sint-Martens-Latem (BE)**

(54) **RECOVERY PROCESS FOR METAL-CONTAINING BYPRODUCTS OF METAL PRODUCTION AND PROCESSING**

(57)     the present invention provides a method for the selective recovery of a metal of interest, such as Cr, from metal-containing slag material via a one-step oxidative alkaline leaching process wherein the waste material is contacted with an alkaline leaching solution comprising an alkali metal hydroxide and an alkali metal or alkaline earth metal hypochlorite whereby simultaneously (i) the metal (Cr) is leached from the metal-containing slag and (ii) an aqueous alkaline leach liquor comprising the metal(s) of interest (Cr) is obtained. This way, the valuable metals can be recovered from this waste material and, at the same time, the environmental impact of these waste materials is reduced and their recyclability is improved by removal of the detrimental metal(s).

EP 3 156 508 A1

**Description**

**FIELD OF THE INVENTION**

The present invention relates to recovery processes of valuable metals from metal containing waste materials, in particular by-products and waste materials from ore processing and metal refinery, such as slags. In particular, the present invention provides methods for the selective recovery of Cr and/or V from metal-containing slags, in particular stainless steel slags and FeCr slags, by oxidative alkaline leaching via the use of hypochlorite.

**BACKGROUND**

In general, slag is the by-product left over after smelting or refining of raw ore during metal production. However, slags often still contain some quantities of valuable metals. In this context, stainless steel slag (SS slag) is a byproduct of the steelmaking and steel refining process, while FeCr slags are generated during FeCr production. These slags can still contain a high amount of valuable or environmentally detrimental metals, including but not limited to chromium (Cr) (e.g. about 0.5-2wt% for SS slags; up to about 2-8 wt% for FeCr slags), vanadium (V) (e.g. 300-400 ppm for SS slag, $\pm$200 ppm for FeCr slag), manganese (Mn) (e.g. 0.3-8wt% for steel and SS slag), and molybdene (Mo) (about 200 - 500 ppm for SS slags).

SS slags are initially stockpiled in the steel plants and sent to slag disposal sites with around 48% of the steel slag used as road base aggregates. In general, slags are thus mainly used in a very limited number of low value applications.

There are still large metal-containing slag quantities being dumped into landfills or stockpiled for long periods at steel or ore refinery plants with a significant environmental impact, particularly due to the leaching of soluble poisonous components, especially Cr(VI), from the metal-containing slag matrix. The transmission of hexavalent chromium into the environment poses a risk of cancer in human beings and animals and adversely alters the genetic diversity of species.

Thus, recovery of Cr from metal-containing slags (such as SS slag or FeCr slag) is not only significant to replenish critical raw material stocks and ores, but it is also important for safeguarding the environment. It has been estimated that in 2000 worldwide 46,000 tons and 637,000 tons of Cr were lost entrapped in stainless steel slag materials and FeCr slag materials, respectively (Johnson et al., Environ. Sci. Technol. (2006) 40: 7060-7069).

In addition, due to the presence of the metals (and their high leaching potential) and legal restrictions, large amounts of these metal-containing slag materials can in practice not be reused as secondary raw materials (e.g. in construction materials/works). The selective removal of the metals without significantly affecting the slag matrix material would allow to recycle these slag materials as secondary raw materials.

Leaching is a widely used extractive metallurgy technique which converts metals into soluble salts in aqueous media. In general, leaching is the first step of metal recovery when a hydrometallurgical method is used. Leaching involves the use of an aqueous, usually acidic or basic, solution, the so-called leaching solution, which is brought into contact with a material containing a valuable metal. Leaching results in a so-called leach liquor, an aqueous solution containing the leached out valuable metal(s), and a solid, leached residue. A particular useful technique, mainly when large volumes of low grade material (having a low metal content) need to be treated, is the so-called heap leaching process. Heap leaching is a low cost, controlled process whereby the material or ore is piled in a heap which is lined with an impervious layer. Leach solution is sprayed (in a controlled manner) over the top of the heap to extract the metal for a period of one month up to two years, and allowed to percolate downward through the heap, where the metal containing leach liquor is collected.

Typical Cr recovery from ore is performed by chromite ore roasting with $Na_2CO_3$ above 1100 °C (Habashi, 1997, Handbook of Extractive Metallurgy IV, Wiley-VCH, NY, pp1761-1811; US4,668,483) which is energy consuming and not applicable to low grade ore materials or materials with low metal content. Caustic soda leaching has been applied to Cr recovery from chromite ore as well as chromium oxides (Habashi, 1997).

Specifically related to Cr recovery from metal-containing slag materials, metal refinery byproducts or other waste materials, the following methods have been disclosed:

- molten salt extraction: chromium oxides containing slag were contacted with molten salts [NaOH(-NaNO$_3$) (see e.g. Zhang et al., 2010, Int.J.Miner.Process. 95, pp. 10-17) or KOH (see e.g. Xu et al., 2005, Miner.Eng. 18, pp. 527-535)] under oxidative pressure (1 - 3.2MPa) at 200 - 450°C. This process requires high pressure and reagents cost due to their high concentration of alkaline agents (60-70 wt%). In addition, this method is not selective as it dissolves the Al and Si based slag matrices.
- Cr leaching from slag materials in acidic conditions (e.g. $H_2SO_4$) (Jiang et al., 2014, Inter.J.Miner.Proc. 130, pp. 102-107) with or without $HClO_3$ or $NaClO_3$ as an oxidant. However, since slag materials are generally composed of alkaline mineral phases, such as calcium/magnesium oxides, other metals (e.g. Cu, Mg, Ca) are also dissolved.

In addition, acid leaching causes a high consumption of acid and there may be a volume increase after leaching due to formation of $CaSO_4$ and/or $MgSO_4$.

- EP0122658 discloses a method for the separate recovery of metals including chromium from iron-containing chemical waste, comprising a first treatment step of the waste with an acid whereby an acidic aqueous solution is obtained. However, this step is not selective as this aqueous solution comprises multiple metal species, which require separate distinct conditions for purification, e.g. a NaOCl treatment at acidic conditions for Cr recovery.
- alkaline pressure leaching assisted with mechanical activation: Cr leaching from stainless steel slags has been performed by applying alkaline pressure leaching assisted with mechanical activation at relatively diluted alkaline condition (< 1 M). However, the Cr yield was rather low (up to 48%) and the process requires high operating temperatures (160 °C - 240 °C) and pressure ($pO_2$ > 8 bar) (Kim et al., 2015; 4th Edition of the International Slag Valorisation Symposium, SVS 2015, April 15-17, 2015, Leuven, Belgium, pp. 161-165).
- US4,171,248 discloses a method of opening iron oxide-chromic oxide ores by contacting the ore (rich in Fe and Cr) with an aqueous alkali metal hypochlorite bleach. However, this method is not selective for Cr, as other metals (Fe) are leached out as well, requiring a separate alkaline precipitation purification step. The method has a limited efficiency for Cr recovery and requires a large amount of alkaline solution.

Accordingly, there is a need for the efficient and selective recovery/removal of valuable metals or other metals of interest, such as Cr, from solid waste materials, such as metal-containing slags and other byproducts from ore and metal processing, in order to reduce the environmental impact of these waste materials, enhance their recyclability and to avoid depletion of natural ore deposits.

## SUMMARY OF THE INVENTION

The applicants have identified methods which address one or more of the disadvantages of the prior art methods detailed above. Indeed, it has been found that selective recovery of metals of interest, including but not limited to Cr, Mn, W, V, Mo, can be performed with alkaline solutions containing an oxidant, in particular hypochlorite.
A first aspect of the present invention relates to a method for the selective recovery of one or more valuable metals from metal-containing waste material comprising contacting said metal-containing waste with an oxidative alkaline leaching solution comprising an alkali metal hydroxide and an alkali metal or alkaline earth metal hypochlorite and recovering an aqueous alkaline leach liquor comprising said one or more valuable metals therefrom. In particular embodiments, said valuable metal is Cr, Mn, W, Mo, V or a combination thereof.
In particular embodiments, said alkaline leaching solution comprises at least 0.5M alkali metal hydroxide and/or at least 0.1 M alkali metal or alkaline earth metal hypochlorite.
In particular embodiments, said metal-containing waste material has a particle size of below 125 $\mu$m as determined by sieves.
In particular embodiments, said metal-containing waste material is a stainless steel slag, a basic oxygen furnace slag, a FeCr slag, an oil fire ash, a bitumen-based fuel ash, a chromite ore processing residue or a tungsten carbide sludge.
In particular embodiments, the pH of the leachate is between 11 and 14, more particularly between 12 and 13.5.
In particular embodiments, said metal-containing waste material is contacted with said alkaline solution at a temperature ranging between 70°C and 120 °C.
In particular embodiments, said metal-containing waste material is contacted with an alkaline leaching solution comprising an alkali metal hydroxide in a concentration ranging from 1.5 to 2M and an alkali metal hypochlorite concentration of at least 1.0M, such as ranging from 1.0M or 1.2M to 2.0M or 2.4 M, at a temperature of between 90°C and 110°C, for 4 to 8 h.
In particular embodiments, said method further comprises the step of subjecting the leached residue to a washing step and a carbonation process, wherein said leached residue is the waste material remaining after recovery of the alkaline leach liquor and from which the one or more valuable metals have been leached.
In particular embodiments, said method further comprises the step of the recovery of at least one of said one or more valuable metals from said alkaline leach liquor. More in particular, in case the valuable metal is Cr, Cr is recovered as a precipitate containing Cr and Ba by precipitation from said alkaline leach liquor via the addition of $Ba^{2+}$ ions. It is understood that the Cr and Ba containing precipitate may be further reacted with $H_2SO_4$.
In particular embodiments said alkaline leach liquor after recovery of the valuable metal(s) is reused as said alkaline leaching solution after adjustment of the levels of alkali metal hydroxide and alkali metal or alkaline earth metal hypochlorite in said alkaline leach liquor. In another embodiment the method of the invention is performed as a heap leaching process.

## BRIEF DESCRIPTION OF THE DRAWINGS

The following description of the figures of specific embodiments of the invention is merely exemplary in nature and is not intended to limit the present teachings, their application or uses.

**Figure 1** shows the Cr leaching (%) in function of the particle size of the slag material in a particular embodiment of the present invention (3.0 g SS slag; leaching conditions: temperature 105°C; leaching time 4h; mass ratio of NaOH to SS slag 0.13; 5.0 ml NaOCl solution comprising 9.9 mmol NaOCl).

**Figure 2** shows the Cr leaching (%) in function of the temperature in a particular embodiment of the present invention (3.0 g SS slag, leaching conditions: NaOCl amount 9.9mmol (in 5.0 mL); mass ratio of NaOH to SS slag 0.13; leaching time 4hr; slag particle size <63$\mu$m).

**Figure 3** represents the Cr leaching (%) in function of leaching time in a particular embodiment of the present invention (3.0 g SS slag; leaching: temperature 105°C; NaOCl amount 9.9 mmol (in 5.0 mL); mass ratio of NaOH to SS slag 0.13; slag particle size <63$\mu$m).

**Figure 4** shows the Cr leaching with increasing NaOH addition in a particular embodiment of the present invention (leaching conditions: SS slag 3.0g; temperature 105°C; leaching time 4hr; NaOCl amount 9.9mmol (in 5.0 mL); slag particle size <63$\mu$m).

**Figure 5** shows the Cr leaching with increasing NaOCl amount according to particular embodiments of the invention (3.0 g SS slag; leaching conditions: temperature 105°C; leaching time 4hr; mass ratio of NaOH to SS slag 0.13; slag particle size <63$\mu$m).

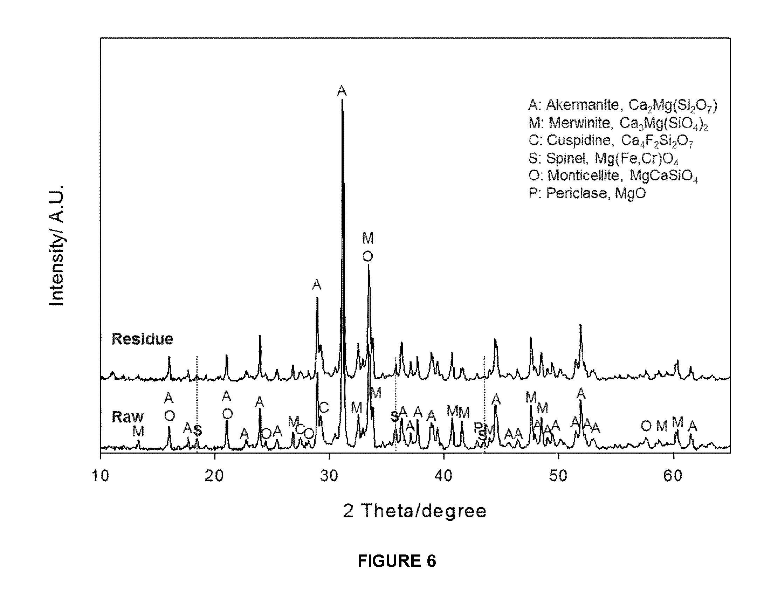

**Figure 6** shows the XRD patterns of the SS slag before and after leaching in a particular embodiment of the present invention.

**Figure 7** shows the XRD pattern of the precipitate obtained by $BaCl_2$ addition to the leachate in a particular embodiment of the invention.

**Figure 8** schematically represents a possible process flowsheet for metal (Cr) recovery from SS slag by NaOCl assisted alkaline leaching according to a particular embodiment of the present invention.

**Figure 9** shows the cumulative Cr leachability during continuous column leaching experiments, as a model for a heap leaching setup according to a particular embodiment of the present invention (CC1: FeCr slag, granulated to < 1mm; CC2: FeCr slag, granulated to < 150 $\mu$m; CC3: fine SS slag, granulated to < 1 mm).

**Figure 10** shows the Cr concentration in the leaching liquor during batch leaching experiments. Batch 1 relates to a leaching experiment using a NaOH/NaOCl leaching solution according to a particular embodiment of the present invention; Batch 2 relates to a leaching experiment using a NaOH leaching solution purged with pure oxygen gas.

## DETAILED DESCRIPTION

The present invention will be described with respect to particular embodiments but the invention is not limited thereto but only by the claims.
As used herein, the singular forms "a", "an", and "the" include both singular and plural referents unless the context clearly dictates otherwise.
The terms "comprising", "comprises" and "comprised of" as used herein are synonymous with "including", "includes" or "containing", "contains", and are inclusive or open-ended and do not exclude additional, non-recited features or method steps. However, the terms "comprising", "comprises" and "comprised of" when referring to a certain number of recited features or method steps also include embodiments which "consist of" said recited features or method steps. Furthermore, the terms first, second, third and the like in the description and in the claims, are used for distinguishing between similar elements and not necessarily for describing a sequential or chronological order, unless specified.
The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.
The recitation of numerical ranges by endpoints includes all numbers and fractions subsumed within the respective ranges, as well as the recited endpoints.
Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention. The term "leaching" as used herein refers to the removal of a valuable metal from a material containing said valuable metal. The "leaching solution" as used herein refers to the solution which is typically an aqueous solution which is brought into contact with the material containing the valuable metal. The term "leach liquor" as used herein refers to the solution resulting from the leaching process, i.e. an aqueous solution containing the leached out valuable metal(s). The "leached residue" refers to the solid material, remaining after the leaching process having a significantly reduced valuable metal(s) content compared to the metal content of the material before leaching. In particular embodiments, the valuable metal content is reduced by at least 20%, more particularly at least 30%, 40%, 50%, 60%, 70% or even at least 80% or 90% or more compared to the material prior to leaching.

The term "selective recovery" and "selective leaching" as used herein means that the matrix material, particularly the minerals making up the slag matrix material, being the matrix material of the metal-containing waste material, including but not limited to $CaO$, $MgO$, $SiO_2$, $Fe_2O_3$, $Al_2O_3$, and the like, are little if at all affected by the leaching process and remain in the leached residue, while the non-matrix compounds, in particular the valuable metals of interest such as Cr, W, Mo, V or Mn, are recovered/leached from the waste materials. Accordingly this term implies that the valuable metals are essentially the only compounds removed from the material.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by the skilled person.

Surprisingly, the inventors found that valuable metals, such as, but not limited to Cr and V, could be selectively dissolved and leached out via a single leaching step from a metal-containing byproduct of steel processing, which contains low levels of such valuable metals, without significantly dissolving or altering the matrix material (typically made up of compounds comprising Al, Si, Ca) or without dissolving other metals (Fe) comprised therein using a strongly alkaline leaching solution comprising an alkali metal hydroxide and an alkali metal or alkaline earth metal hypochlorite as oxidant, without requiring an acidic treatment, despite the fact that the stability and oxidative potential of hypochlorite is severely reduced under such alkaline conditions.

Indeed, hypochlorite ($OCl^-$) is an unstable compound, particularly in strongly alkaline conditions, which is subject to a number of decomposition pathways. In addition, it is well known that the hypochlorite ion ($ClO^-$) displays the strongest tendency as an oxidant having the highest reduction potential in acidic conditions. Its reduction potential is lower when converted to chlorate ($ClO_3^-$) or at higher alkalinity.

$$\underline{\text{acidic:}} \quad ClO^- + 2H^+ + 2e^- = Cl^- + H_2O \quad\quad E° = 1.72\,V_{SHE}$$
$$ClO_3^- + 6H^+ + 6e^- = Cl^- + 3H_2O \quad\quad E° = 1.44\,V_{SHE}$$
$$\underline{\text{basic:}} \quad ClO^- + H_2O + 2e^- = Cl^- + 2OH^- \quad\quad E° = 0.89\,V_{SHE}$$
$$ClO_3^- + 3H_2O + 6e^- = Cl^- + 6OH^- \quad\quad E° = 0.62\,V_{SHE}$$

The present invention thus relates to methods for the selective recovery of valuable metals or other metals of interest, including but not limited to Cr, V, W, Mo and Mn from metal-containing waste materials, wherein said metal-containing waste material is contacted with an alkaline leaching solution comprising an alkali metal hydroxide and an alkali metal or alkaline earth metal hypochlorite. Indeed, it has been observed that certain metals commonly occurring in these waste materials are soluble in alkaline solutions when these metals occur in a high oxidation state, i.e. having an oxidation state of +4, +5, +6 or +7, such that they can efficiently be removed by alkali leaching. The present method allows for a one step selective leaching process of precious metals. Accordingly, the methods provided herein typically encompass contacting the metal-containing waste material directly with an alkaline leaching solution without pre-treatment of the material at a lower pH. In particular, in this method, simultaneously with the selective metal leaching, such as Cr and/or V leaching, an alkaline leach liquor comprising said metals, such as Cr(VI), is obtained.

In the context of the present invention, the metal-containing waste materials are preferably metal-containing slag material or other byproducts from metal or ore production and processing. The metal-containing waste materials envisaged for use herein typically comprise metal oxides with calcium/magnesium oxides and silicates as the main matrix material, with little to no metal sulphur-containing compounds, such as less than 0.5 wt%, preferably less than 0.3 wt% of metal sulphur-containing compounds. Particularly preferred are metal-containing waste materials, such as stainless steel slags or FeCr slags or other metal-containing slags, comprising generally less than 10 wt% or less than 8 or 6 wt% of valuable metals, such as Cr, W, Mo, Mn and/or V, such as less than 5 wt% or 3wt%. In particular embodiments, the metal-containing waste material is, a residue from the basic oxygen converter in steel making operations. In particular embodiments, the metal-containing waste material is a stainless steel slag, electric arc furnace (EAF) slag, argon oxygen decarburization (AOD) slag, a FeCr slag or a chromite ore processing residue (COPR), which are particularly useful as a source material for the selective recovery of Cr. In particular embodiments, the metal-containing waste material is basic oxygen furnace (BOF) slag, an oil fire ash or bitumen-based fuel ash (such as an Orimulsion ash), which may be particularly useful as a source material for the selective recovery of V and/or Mo. In particular embodiments, the metal-containing waste material is a tungsten carbide sludge (typically containing Tungsten carbide (WC) and Co metal), which is particularly useful as a source material for the selective leaching of W (as $WO_4^{2-}$ in alkaline conditions). Preferably, the metal-containing waste or slag materials have a particle size of less than 1 mm or 0.5 mm, such as less than 250 $\mu$m, 150 $\mu$m or 125 $\mu$m, more preferably less than 63 $\mu$m (as determined by sieving).

In the context of the present invention, the leaching solution comprises an alkali metal hydroxide, including but not limited to NaOH or KOH and an alkali metal or alkaline earth metal hypochlorite, including but not limited to NaOCl, KOCl, $Ca(OCl)_2$, and/or $Mg(OCl)_2$, acting as an oxidant. In particular embodiments, the alkaline leaching solution comprises NaOH, KOH or a combination thereof. In particular embodiments, the alkaline leaching solution comprises NaOCl, KOCl or a combination thereof.

Preferably, the alkali metal hydroxide concentration of the alkaline leaching solution envisaged herein is at least about 0.5M, more preferably ranges from about 0.5M to about 2.5M, even more preferably ranges from about 1 M to about 2.5M, most preferably ranges from about 1.5M to about 2 M. Particularly preferred is an alkali metal hydroxide concentration of about 2.0M. Without being bound by theory, at higher alkali metal concentration, hypochlorite decomposition may be too fast, thus resulting in a decreased leaching efficiency.

In particular embodiments, the pH in the leach liquor is between 10 and 14, more particularly between 11 and 14, more particularly between 12 and 13.5.

In particular embodiments of the method of the present invention, the mass ratio of the alkali metal hydroxide to the metal-containing slag material is at least 0.1 to 3, more preferably ranges from about 0.1 to 3 to about 1.0 to 3, even more preferably ranges from about 0.2 to 3 to about 0.6 to 3; most preferably is about 0.4 to 3.

In particular embodiments of the method of the present invention, the mass ratio of the alkali metal hydroxide to the valuable metal content of the metal-containing slag material is at least 3 to 1, more preferably ranges from about 3 to 1 to about 30 to 1; most preferably ranges from about 10 to 1 to about 15 to 1. A particular preferred mass ratio of alkali metal hydroxide to valuable metal content of the metal-containing slag material is about 13 to 1.

The alkali metal or alkaline earth metal hypochlorite concentration of the alkaline leaching solution envisaged in the methods provided herein is at least about 0.1 M, 0.15M, 0.2M or 0.25M, more preferably is at least 0.3M, 0.4M, 0.5M, 0.6M or 0.7M, even more preferably is at least 0.8M or 1.0M, most preferably is at least 1.5M. A particularly preferred hypochlorite concentration ranges from about 1.5M to about 2.0M. It is understood that lower hypochlorite concentrations, such as at least about 0.1M, 0.15M, 0.2M or 0.25M, may be particularly useful in a leaching setup configured to be performed with long contact times, such as a heap leaching setup as envisaged herein (see below).

In particular embodiments, the alkaline leaching solution is a hypochlorite-based bleach solution having an active chlorine concentration of at least about 0.5%, 1% or 1.5% active chlorine, more preferably has an active chlorine concentration of at least about 2%, 3%, 4% or 5% active chlorine, even more preferably has an active chlorine concentration of at least 6%, 7% or 8% active chlorine, most preferably has an active chlorine concentration of at least about 10% active chlorine, such as about 12% or 14% active chlorine.

In particular embodiments of the alkaline leaching solution envisaged in the methods provided herein, said alkaline leaching solution comprises NaOH and NaOCl, wherein the NaOH concentration preferably ranges from about 0.5M to about 2.5M, more preferably ranges from about 1 M to about 2.5M, most preferably ranges from about 1.5M to about 2 M; and wherein the NaOCl concentration is at least about 0.2M or 0.4M, more preferably is at least 0.8 or at least 1.2M, most preferably is at least 1.5M, such as ranges from about 1.5M to about 2.0M. Particularly preferred is an alkaline leaching solution comprising about 2.0 M NaOH and about 2.0M NaOCl.

In particular embodiments of the alkaline leaching solution envisaged in the methods provided herein, said alkaline leaching solution comprises KOH and KOCl, wherein the KOH concentration preferably ranges from about 0.5M to about 2.5M, more preferably ranges from about 1 M to about 2.5M, most preferably ranges from about 1.5M to about 2 M; and wherein the KOCl concentration is at least about 0.2M or 0.4M, more preferably is at least 0.8M or at least 1.2M, most preferably is at least 1.5M, such as ranges from about 1.5M to about 2.0M. Particularly preferred is an alkaline leaching solution comprising about 2.0 M KOH and about 2.0M KOCl.

In particular embodiments of the method of the present invention, the mass ratio of the sodium or potassium hypochlorite to the metal-containing slag material is at least 0.1 to 3, more preferably ranges from about 0.1 to 3 to about 1.5 to 3, even more preferably ranges from about 0.2 to 3 to about 1.0 to 3; most preferably ranges from about 0.5 to 3 to about 0.75 to 3.

In certain embodiments, the oxidative alkaline leaching solution as envisaged herein is contacted with the metal-containing waste materials, in particular metal-containing slag material or other byproducts from metal or ore processing, in a heap leaching setup as known in the art. In particular, metal-containing waste materials of a suitable particle size, as envisaged herein, are heaped on an impermeable leach pad and are irrigated under controlled conditions, via sprinklers or drip irrigation, with the oxidative alkaline leaching solution, which is allowed to percolate over time (months or years) through the heap, to dissolve and leach out the metal(s) of interest, such as Cr, V, W, Mo and/or Mn, in particular Cr and/or V. The leach liquor containing the dissolved metal(s) of interest is then collected and typically treated to recover the metal(s) of interest. Preferably, after recovery of the metal(s) of interest and adjustment of the reagent levels, the solution is recycled to the heap. In particular embodiments, the heap leaching setup as set out herein can be easily applied to landfilled slag materials since material stacking, bottom lining and drainage water collection and treatment installations are already in place.

In other particular embodiments, the methods envisaged herein are performed under controlled conditions at elevated temperatures. The leaching temperature at which the selective metal leaching according to the present invention is performed is preferably in the range between 70°C and 120°C, more preferably is in the range between 80°C and 110°C, most preferably is in the range between 90°C and 105°C. A particularly preferred temperature is above the boiling point, such as 105°C.

In particular embodiments of the methods envisaged herein, the leaching time during which the selective metal leaching according to the present invention is performed is preferably at least 2h, more preferably at least 4h, even more preferably at least 6h. Particularly preferred is a leaching time between 4h and 8h. Without being bound by theory, decomposition of hypochlorite increases with longer reaction times, thus the leaching efficiency reduces with increasing leaching times.

Preferably, the methods of the present invention comprise a further step of separating the alkaline leach liquor from the leaching residue via any suitable solid-liquid separation system known in the art, including but not limited to vacuum filters, filter presses, centrifuges and decanters.

The leaching residue corresponds to the depleted waste material wherein at least 20%, more particularly at least 30%, 40%, 50%, 60%, 70% or even at least 80% or 90% of the metal(s) of interest have been leached out and comprises the matrix material of said waste material, in particular the matrix material of the slag materials comprising calcium/magnesium oxides and silicates as the main matrix material.

In particular embodiments, said leaching residue is further subject to one or more washing steps and optionally to a carbonation process, as disclosed in WO2013060870, which is hereby incorporated herein by reference. In the carbonation process according to WO2013060870 a granular material, such as the leached residue, is carbonated by means of a $CO_2$ containing gas and press-moulded under a pressure of at least 25 MPa. Advantageously, the carbonation process allows for Ca- and Mg-containing slag materials wherein at least 70%, 80%, 85% or even 90% of the metal(s) of interest have been leached out to be shaped and solidified to generate strong building materials useful for construction purposes, whereby Ca- and Mg-carbonates act as a binding agent.

Preferably, the methods of the present invention also comprise a further step of recovery of the metal of interest, in particular Cr(VI) and/or V, from the alkaline leach liquor. In particular embodiments, the metal of interest is recovered via ion adsorption, ion exchange, (electro-)chemical reduction or crystallization, such as e.g. via crystallization as $K_2Cr_2O_7$ or $Na_2Cr_2O_7$.

In particular embodiments, the soluble Cr(VI) in the alkaline leach liquor is precipitated from said alkaline leach liquor via the addition of a soluble Barium salt, according to the following reaction: $Ba^{2+} + CrO_4^{2-} = BaCrO_{4(s)}$. Advantageously, Cr(VI) can be further purified from this $BaCrO_4$ precipitate via acid dissolution of the precipitate using $H_2SO_4$, whereby Ba ions can be removed as the insoluble $BaSO_4$ via suitable solid/liquid separation techniques known in the art, leaving the Cr(VI) (as $Cr_2O_7^{2-}$) in solution.

Alternatively, $BaCrO_4$ finds use in a number of applications, including but not limited to:

- Barium chromate can be used as a sulfate scavenger in chromium electroplating baths.
- Barium chromate is an oxidizing agent, making it useful as a burn rate modifier in pyrotechnic compositions. It is especially useful in delay compositions such as delay fuses.
- Barium chromate can be used as a corrosion inhibitive pigment, particularly when zinc-alloy electroplating surfaces.
- Barium chromate is also used in the composition of a catalyst for alkane dehydration.
- Barium chromate may be used as a paint color component.

The application further provides systems for carrying out the methods provided herein. More particularly, such systems may comprise tank or vat leaching systems.

The present invention will be illustrated hereafter by the following non-limiting examples.

**EXAMPLES**

*Example 1. Effect of particle size on leaching efficiency*

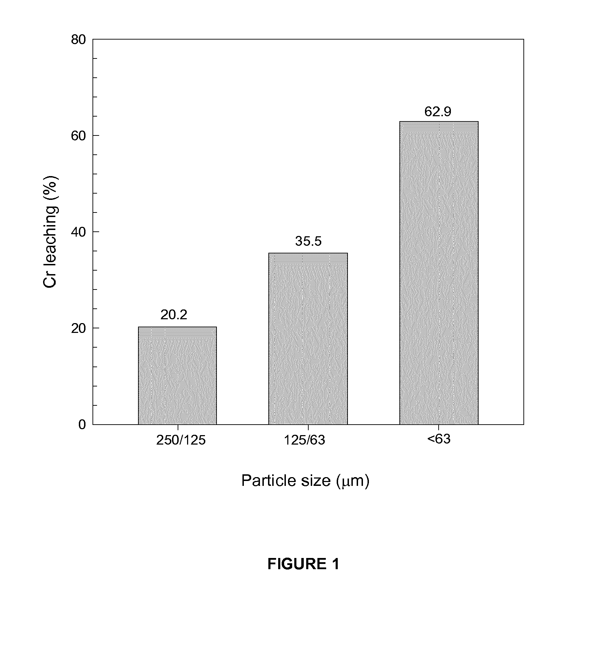

The effect of particle size on Cr leaching was investigated for the NaOH-NaOCl system (3.0 g SS slag; mass ratio of NaOH to SS slag of 0.13; 9.9 mmol NaOCl in 5 ml solution) at 105°C for a leaching time of 4h by using three particle size fractions of the SS slag: 125-250, 63-125, and below 63 $\mu$m. The results are presented in Figure 1. It shows that Cr leaching increases with decreasing particle size. Thus, the increased Cr leachability can be attributed to the increase of specific surface area of the slag, as well as a higher reactivity. Therefore, the subsequent experiments were performed by using the size fraction below 63 $\mu$m.

*Example 2. Effect of temperature on leaching efficiency*

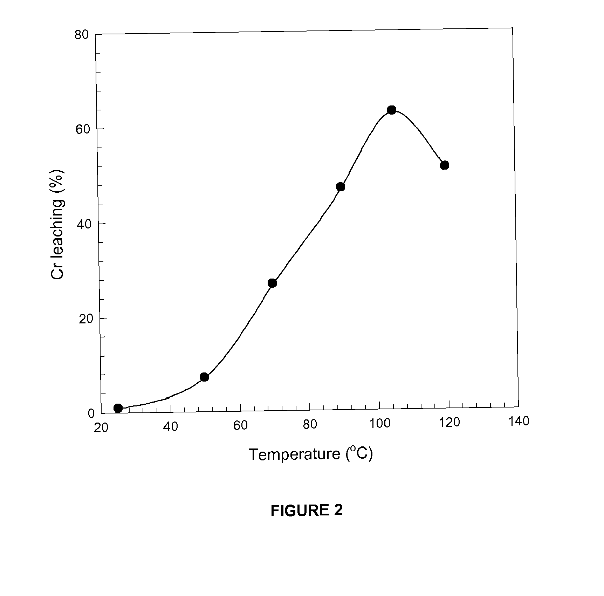

The dependence of temperature on Cr leaching from SS slag was determined in the temperature range 25 - 120°C by using the <63$\mu$m size fraction of the SS slag with an alkali to slag mass ratio of 0.13:1 in the presence of NaOCl (9.9 mmol) as an oxidant. The results presented in Figure 2 show that Cr leaching increases with temperature from 25°C to 105°C after which it decreases. It indicates that the temperature has significant influence on the increase of Cr leaching until a certain temperature. Even though the temperature increase enhance the kinetics of the decomposition of NaOCl, it also attributed to an increase of the Cr leaching efficiency from 0.9% at 25°C to 62.9% at 105°C.

*Example 3. Effect of leaching time on leaching efficiency*

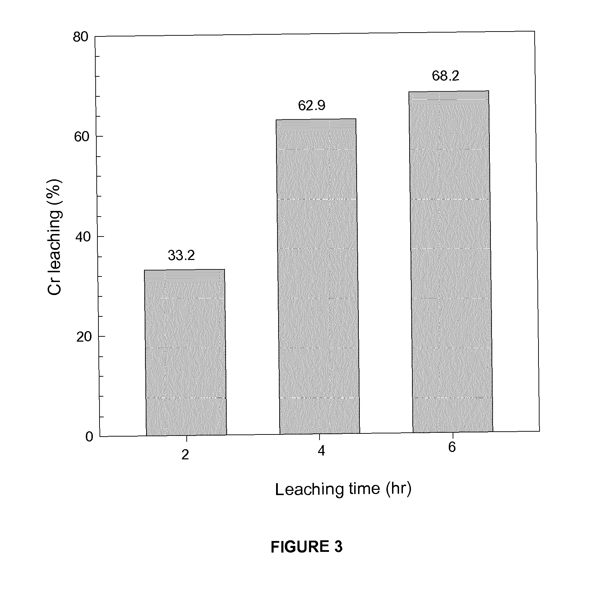

The alkaline Cr leaching assisted by NaOCl as a function of reaction time at 105°C is presented in Figure 3. As leaching time is increased from 2 to 4 h, the leaching was almost doubled from 33% to 63%. Increasing the leaching time from 4 to 6h only slightly increased the Cr leaching from 63 to 68%.

*Example 4. Effect of NaOH concentration on leaching efficiency*

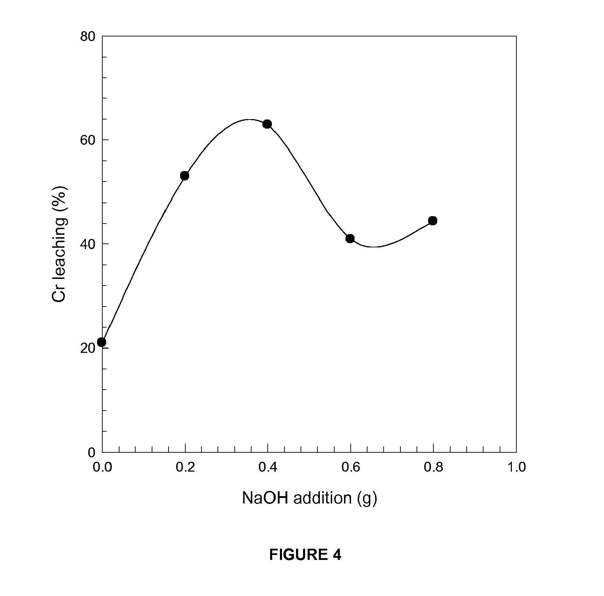

The amount of NaOH used during reaction is an important factor because it influences mass transport and its recycling amount in the whole process. According to the following reaction $Cr_2O_3 + 1.5O_{2(g)} + 4NaOH = 2Na_2CrO_4 + 2H_2O$ ($\Delta G_{298K}$ = -89.01 kcal) and taking the Cr content of the SS slag into account (see Table 1), the theoretical mole ratio of the Cr in SS slag (assuming that all Cr in the slag is present as $Cr_2O_3$) and alkali for a complete reaction is 1:4, corresponding to a NaOH amount of 0.1g for 3.0g SS slag.
In this experiment, presented in Figure 4, the amount of added NaOH to 3.0g SS slag was varied from 0g to 0.8g. As the amount of NaOH increases from 0g to 0.4g, the Cr leaching enhanced from 21.0% to 62.9%. After that, further addition of sodium hydroxide has a negative effect on the Cr leaching. Also, Cr leaching without NaOH addition (0g NaOH) has a relatively low efficiency (21.0%), indicating NaOH is a crucial factor in dissolving Cr(III) compounds. In addition, the above mentioned reaction with NaOH is thermodynamically favoured (negative value of $\Delta G_{298K}$ = -89.01 kcal), when compared to the corresponding reaction without NaOH:

$$Cr_2O_3 + 1.5O_{2(g)} = 2CrO_3 \quad \Delta G_{298K} = 12.11 \text{ kcal}$$

Under the experimental conditions, the optimum NaOH amount is about 0.4g to treat 3.0g of SS slag.

*Example 5. Effect of NaOCl concentration on leaching efficiency*

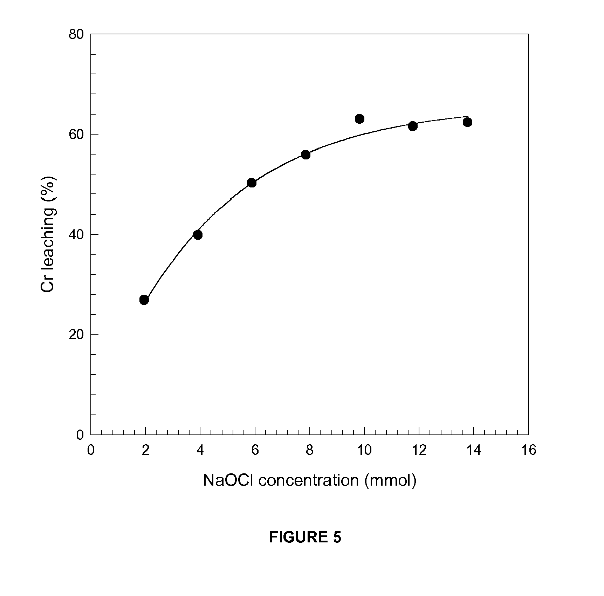

Figure 5 shows the effect of the NaOCl concentration on Cr leaching from SS slag. The Cr leaching increased from 27.3% to 55.7% with increasing NaOCl levels of 2.0 to 7.9mmol (in 5 ml solution), respectively. A further increase of the NaOCl amount to 9.9mmol increased Cr leaching to around 63% after which saturation was reached.

*Example 6. Residue analysis*

Three grams of SS slag was reacted at the optimally determined conditions according to the previous examples (leaching for 6h, at 105°C, with a mass ratio of NaOH to SS slag of 0.13, with 9.9mmol NaOCl (on 5ml solution)) and subsequently washed with deionized water. As shown in the table 1, most of the elements such as Al, Ca, and Si were little if at all dissolved (Al 0.3%, Ca 2.0%, Si 0.4%) from the slag. The maximum leaching of a matrix element was that of Mg, 18.7%. The element Na originates from the used alkaline agent, NaOH, which did not interact with the residue and remained almost entirely in the solution. Also, Cr leaching was 68% with a simultaneous leaching of V for 61 %.

**Table 1.** Chemical composition of SS slag before and after leaching

| Elements | Raw | *Residue | Leaching (%) |
|---|---|---|---|
| Al (%) | 0.99 | 1.00 | 0.00 |
| Ca (%) | 30.10 | 29.80 | 1.99 |
| Cr (%) | 1.15 | 0.37 | 68.15 |
| Fe (%) | 0.60 | 0.59 | 2.65 |
| Mg (%) | 6.32 | 5.19 | 18.70 |
| Mn (%) | 0.55 | 0.45 | 18.97 |
| Ti (%) | 0.73 | 0.74 | 0.00 |
| V (mg/kg) | 308 | 120 | 61.43 |
| Si (%) | 15.70 | 15.80 | 0.37 |
| Na (%) | 0.30 | 0.22 | 26.74 |
| Ba (mg/kg) | 355 | 267 | 25.54 |
| Weight (g) | 3.00 | 2.97 | **1.00 |

*Leaching conditions: 9.9mmol NaOCl (in 5 ml), mass ratio of NaOH to SS slag 0.13, 6h leach time, 105°C, SS slag (<63μm) 3.0g

**Weight loss (%) after leaching

$$\text{Leaching (\%)} = (M_{raw} - M_{residue})/M_{raw} \times 100 \quad (M_{raw}: \text{metal content (wt.\%) in raw, } M_{residue}:$$

metal content (wt.%) in residue

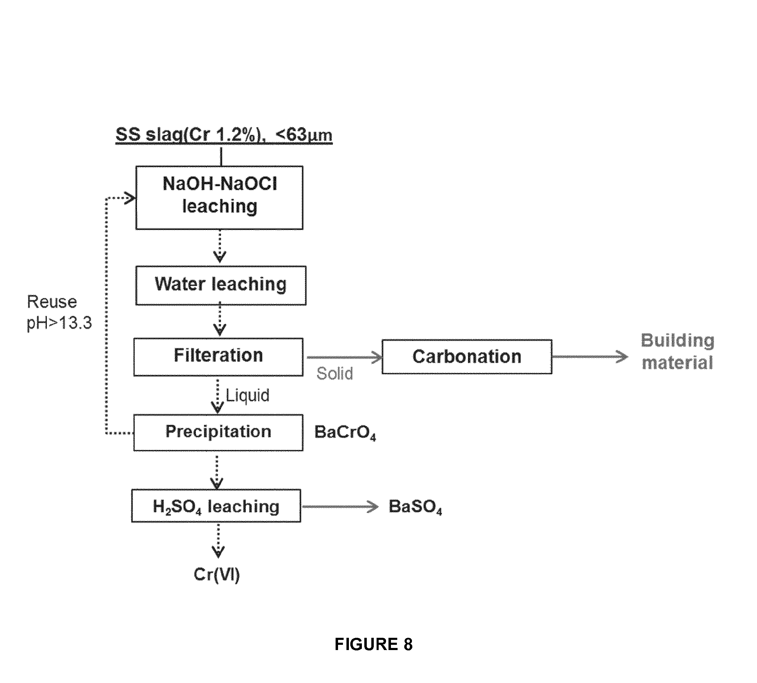

Figure 8 shows the XRD patterns before and after NaOH-NaOCl leaching of the SS slag. The patterns are almost the same except for a lower intensity of the Cr-containing spinel phase in the residue indicating a lower content of Cr. Polished surfaces of the residue were analyzed by SEM and elemental mapping (not shown). SEM and elemental mapping images clearly indicate that the remaining Cr containing phases are mainly FeCr alloy, and Cr-Al-Mg-Ti oxides. This indicates that the mineral structure of some parts of the Cr-containing spinel structures, which are composed of various metals such as Al, Mg, Fe and Ti, are presumably difficult to destroy in the NaOH-NaOCl system.

*Example 7. Cr recovery from the leach liquor*

In order to recover Cr from the leach liquor which was obtained at the optimum leaching condition, precipitation as $BaCrO_4$ by adding $BaCl_2$ was applied according to the following reaction: $BaCl_{2(a)} + CrO_4^{2-} = BaCrO_{4(s)} + 2Cl^-$

The initial metal concentrations of the leachate used for the precipitation are presented in Table 2. The reaction of the precipitation was performed without pH adjustment (i.e. at pH 12.7). After filtration of the precipitate, about 99.9% of Cr(VI) was removed from the solution and 0.2mg/L Cr(VI) remained in the filtrate as shown in Table 2.

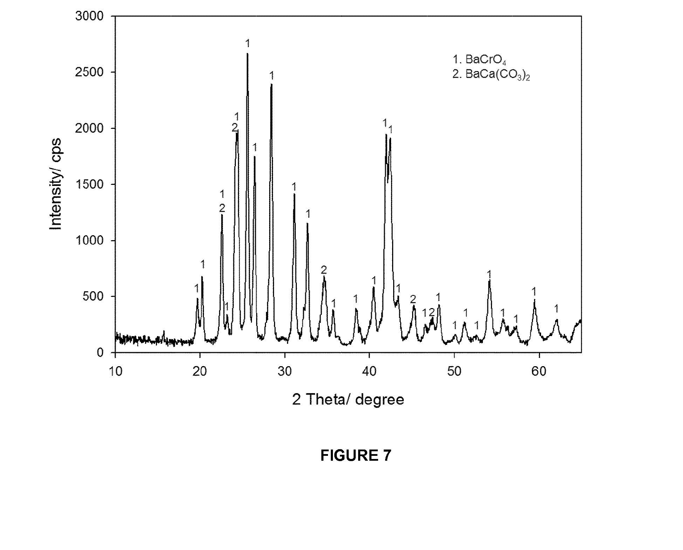

Table 3 shows the chemical composition of the recovered precipitate. It shows that Ba and Cr are the main elements which account for 99.4% of the precipitate. XRD patterns of the precipitate presented in Figure 7, again confirming that $BaCrO_4$ is the main phase. $BaCa(CO_3)_2$ was present as a minor phase.

**Table 2.** The leachate composition used for Cr precipitation as $BaCrO_4$ (unit: mg/L)

| (mg/L) | Al | Cr | Fe | Mg | Mn | Ti | V | Ca | Ba |
|---|---|---|---|---|---|---|---|---|---|
| Initial | 5.8 | 348.0 | 0.2 | 0.2 | 21.7 | 0.2 | 4.6 | 30.1 | 562.2 |
| Filtrate | 1.1 | 0.2 | 0.1 | 0.2 | 0.6 | 0.2 | 0.3 | 1.43 | 365.9 |

**Table 3.** Chemical composition of precipitated $BaCrO_4$

| Elements | Al (mg/kg) | Ca (mg/kg) | Cr (%) | Fe (mg/kg) | Mg (mg/kg) | Mn (mg/kg) | Ti (mg/kg) | V (mg/kg) | Ba (%) |
|---|---|---|---|---|---|---|---|---|---|
| $BaCrO_4$ | DL | 2180 | 7.91 | DL | DL | 50 | 3.4 | 328 | 36.6 |
| DL: below of detection limit | | | | | | | | | |

To further purify Cr from the precipitate and remove Ba, an acid dissolution is needed according to the reaction $2BaCrO_{4(s)} + H_2SO_4 = H_2O + Cr_2O_7^{2-} + 2BaSO_{4(s)}$. This way, Cr can be more concentrated and purified without Ba which is removed as $BaSO_4$ (solubility 2.94mg/L at 20°C).

*Example 8. Process*

Based on the results of the Cr leaching experiments, a SS slag recycling process can be envisaged as shown in Figure 8. This process will result in the recovery of valuable chromium and will yield a leached residue or matrix material from which the Cr content, a hazardous pollutant, is reduced. This Cr depleted leached residue can be further recycled after washing steps with water by means of a carbonation process (Quaghebeur, et al., 2010; Kim et al., 2015). This process allows for Ca- and Mg-containing slag materials to be shaped and solidified whereby Ca- and Mg-carbonates act as a binding agent. This way, strong building products can be produced which will find application in many construction applications. Furthermore, chromium can be recovered from the leach liquor by precipitation as $BaCrO_4$ for more than 99.9%. In addition, after removal of chromium from the leach liquor, the Cr depleted leach liquor can be reused (after adjustment of the NaOH and NaOCl) as leaching solution.

Example 9. Heap leaching process

An alkaline oxidative heap leaching process was simulated on lab-scale by a column leaching test. A column was filled with a fine grained stainless steel slag material and subsequently permeated by a leaching solution comprising NaOH and NaOCl at a set flow rate.

Two Cr containing mineral waste materials, i.e. a stainless steel (SS) slag and a FeCr slag, were tested. XRF analysis showed a Cr content of 1.2% for the SS slag sample and 2.3% for the FeCr slag. Fe content ranged from 0.44 to 0.71%

Column leaching tests were performed by means of up flow percolation of the leaching solution through a packed bed of the solid sample at a flow rate of about 240 mL/day for 64 days. Between 500 g and 640 g of the solid sample (granular size < 1 mm for the SS slag sample or < 150 $\mu$m and <1 mm for the FeCr sample (by sieving)) was packed in a glass column with a diameter of 5 cm. The solid material was wetted with about 10 wt% of the leaching solution prior to introduction in the column to avoid swelling of the material in the column upon contact with the leaching solution. The leaching solution contained 0.67 M NaOH and 0.66 M NaOCl. The leaching solution was prepared each day, percolates through the column and is collected for analysis. The flow of the leaching solution was controlled by a peristaltic pump system. The leach liquor was collected in a closed plastic beaker. For each sample, collected at a certain time, the collection beaker was replaced. The collected sample was weighed and the pH, conductivity and redox potential were measured, and subjected to ICP-AES analysis. Columns and vessels were shielded from light to avoid decomposition of NaOCl.

The leaching fractions collected for the column leaching experiments show a constant pH of about 13.4 and both the conductivity and the oxidation-reduction potential remained fairly constant during the experiment.

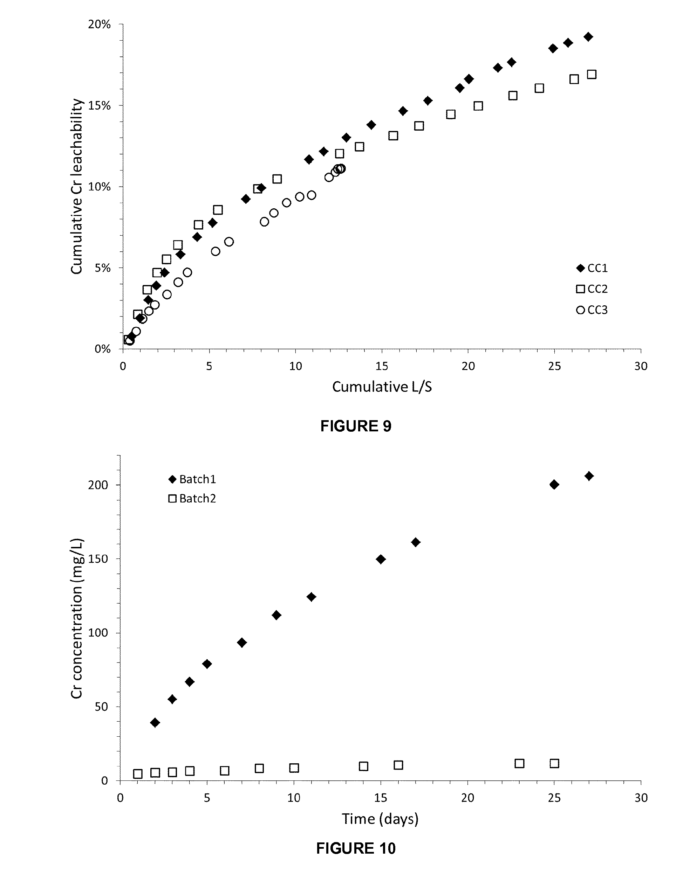

For all setups, the results showed a selective leaching of Cr with a low dissolution of matrix elements, such as Al, Fe, Si and Ca. After 65 days up to 18% of Cr has been leached (Figure 9).

Example 10. Comparative example: Cr leaching with NaOCl or $O_2$ as oxidants

Batch leaching tests were performed in a plastic beaker at room temperature which contained 100 g slag material (FeCr slag, <150 $\mu$m) and 1 L leaching solution. In a first setup ("Batch 1 "), the leaching solution consisted either of 1 M NaOH + 0.197 M NaOCl as oxidising agent. In a second setup ("Batch 2"), the leaching solution consisted of 1 M NaOH solution which was constantly purged by pure $O_2$ gas. The slurry was magnetically stirred at 200 rpm. At regular intervals the temperature, pH and conductivity (Mettler Toledo SevenMulti) and oxidation/reduction potential (WTW Multi3430) of the slurry was measured and a 10 mL sample was taken while stirring. The total concentration of chromium and other matrix elements in the leach liquor (sample) was determined by ion coupled plasma atomic emission spectroscopy (ICP-AES, Thermo Elemental). Experiment Batch1 lasted for 27 days, while Batch 2 for 25 days. The liquid to solid ratio (L/S) was 10 for both experiments.

For both Batch 1 and Batch 2 experiments the pH and conductivity of the slurry remained constant at about pH 13.5 and 185 mS/cm, respectively. The pH and conductivity are mainly imposed by the NaOH in solution. However, the oxidation-reduction potential (ORP) strongly depends on the oxidising agent used. In the case of NaOCl, the ORP remained constant at about 666 $mV_{SHE}$, showing that no decrease in oxidation potential occurred over time. In the case of purging with $O_2$, the ORP remained close to about 220 $mV_{SHE}$, indicating that a low oxidising environment was present in the Batch 2 experiment. Clearly, the presence of NaOCl in the leaching solution enhanced the alkaline Cr leachability with respect to $O_2$ purging (Figure 10). Over time, the leached Cr concentration increased for both experiments, indicating that the leach liquor remained reactive for the whole duration of the experiments. This indicates that a prolonged and continuous use of the same leaching solution is possible, which allows reuse and circulation of the leaching liquor in e.g. a heap leaching setup.

This experiment also shows that, under these experimental conditions, Cr leaching is about 20 times faster when NaOCl is used as oxidizing agent compared to oxygen.

**Claims**

1. A method for the selective recovery of one or more valuable metals from metal-containing waste material comprising contacting said metal-containing waste with an oxidative alkaline leaching solution comprising an alkali metal hydroxide and an alkali metal or alkaline earth metal hypochlorite and recovering an aqueous alkaline leach liquor comprising said one or more valuable metals therefrom.

2. The method according to claim 1, wherein said valuable metal is Cr, Mn, W, Mo, V or a combination thereof.

3. The method according to claim 1 or 2, wherein said alkaline leaching solution comprises at least 0.5M alkali metal hydroxide and/or at least 0.1M alkali metal or alkaline earth metal hypochlorite.

4. The method according to any of the preceding claims wherein said metal-containing waste material has a particle size of below 125 $\mu$m as determined by sieving.

5. The method according to any of the preceding claims wherein said metal-containing waste material is a stainless steel slag, a BOF slag, a FeCr slag, an oil fire ash, a bitumen-based fuel ash, a chromite ore processing residue or a tungsten carbide sludge.

6. The method according to any of the preceding claims wherein the pH of the leach liquor is between 11 and 14, more particularly between 12 and 13.5.

7. The method according to any of the preceding claims wherein said metal-containing waste material is contacted with said alkaline solution at a temperature ranging between 70°C and 120 °C.

8. The method according to any of the preceding claims wherein said metal-containing waste material is contacted with an alkaline leaching solution comprising an alkali metal hydroxide in a concentration ranging from 1.5 to 2M and an alkali metal hypochlorite in a concentration ranging from 1.6M to 2.0M, at a temperature of between 90°C and 110°C, for 4 to 8 h.

9. The method according to any of the preceding claims further comprising the step of subjecting the leached residue to a washing step and a carbonation process, wherein said leached residue is the waste material remaining after recovery of the alkaline leach liquor and from which the one or more valuable metals have been leached.

10. The method according to any of the previous claims further comprising the step of the recovery of at least one of said one or more valuable metals from said alkaline leach liquor.

11. The method according to claim 10 wherein the valuable metal is Cr, and Cr is recovered as a precipitate containing Cr and Ba by precipitation from said alkaline leach liquor via the addition of $Ba^{2+}$ ions.

12. The method according to claim 11 wherein the precipitate containing Cr and Ba is further reacted with $H_2SO_4$.

13. The method according to claims 11 or 12 wherein said alkaline leach liquor after recovery of the valuable metal(s) is reused as said alkaline leaching solution after adjustment of the levels of alkali metal hydroxide and alkali metal or alkaline earth metal hypochlorite in said alkaline leach liquor.

14. The method according to any one of claims 1 to 6, wherein the method is performed as a heap leaching process.

**FIGURE 1**

FIGURE 2

**FIGURE 3**

**FIGURE 4**

FIGURE 5

A: Akermanite, $Ca_2Mg(Si_2O_7)$
M: Merwinite, $Ca_3Mg(SiO_4)_2$
C: Cuspidine, $Ca_4F_2Si_2O_7$
S: Spinel, $Mg(Fe,Cr)O_4$
O: Monticellite, $MgCaSiO_4$
P: Periclase, $MgO$

**FIGURE 6**

FIGURE 7

SS slag(Cr 1.2%), <63μm

```
                    ┌─────────────────┐
              ┌····▶│   NaOH-NaOCl    │
              ┊     │    leaching     │
              ┊     └─────────────────┘
              ┊              ┊
              ┊              ▼
              ┊     ┌─────────────────┐
    Reuse     ┊     │  Water leaching │
    pH>13.3   ┊     └─────────────────┘
              ┊              ┊
              ┊              ▼
              ┊     ┌─────────────┐         ┌──────────────┐   Building
              ┊     │ Filteration │────────▶│  Carbonation │──▶ material
              ┊     └─────────────┘  Solid  └──────────────┘
              ┊           ┊ Liquid
              ┊           ▼
              ┊     ┌─────────────┐
              └·····│ Precipitation│  BaCrO₄
                    └─────────────┘
                           ┊
                           ▼
                    ┌──────────────┐
                    │ H₂SO₄ leaching│────────▶ BaSO₄
                    └──────────────┘
                           ┊
                           ▼
                        Cr(VI)
```

FIGURE 8

FIGURE 9

FIGURE 10

Europäisches
Patentamt

European
Patent Office

Office européen
des brevets

**EUROPEAN SEARCH REPORT**

Application Number

EP 15 19 0176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/278686 A1 (HALPIN PETER T [US] ET AL) 4 November 2010 (2010-11-04) * the whole document * | 1-14 | INV. C22B7/00 C22B7/04 |
| X | DATABASE WPI Week 201517 2015 Thomson Scientific, London, GB; AN 2015-08892E XP002756569, & CN 104 195 346 A (INST PROCESS ENG CHINESE ACAD SCI) 10 December 2014 (2014-12-10) * the whole document * | 1-14 | |
| X | US 4 445 935 A (POSEY FRANZ A [US] ET AL) 1 May 1984 (1984-05-01) * the whole document * | 1-14 | |
| X | WO 2010/143623 A1 (KURITA WATER IND LTD [JP]; NIPPON STEEL CORP [JP]; SUMIDA ICHIRO [JP];) 16 December 2010 (2010-12-16) * the whole document * | 1-14 | TECHNICAL FIELDS SEARCHED (IPC) C22B |

The present search report has been drawn up for all claims

| Place of search | Date of completion of the search | Examiner |
|---|---|---|
| Munich | 15 April 2016 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 0176

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2016

| Patent document cited in search report | | Publication date | Patent family member(s) | | Publication date |
|---|---|---|---|---|---|
| US 2010278686 | A1 | 04-11-2010 | BR PI1010875 A2 | | 15-03-2016 |
| | | | CA 2760438 | A1 | 04-11-2010 |
| | | | CN 102549175 | A | 04-07-2012 |
| | | | EP 2430201 | A1 | 21-03-2012 |
| | | | RU 2011148512 | A | 10-06-2013 |
| | | | TW 201040289 | A | 16-11-2010 |
| | | | US 2010278686 | A1 | 04-11-2010 |
| | | | US 2012247271 | A1 | 04-10-2012 |
| | | | WO 2010126593 | A1 | 04-11-2010 |
| CN 104195346 | A | 10-12-2014 | NONE | | |
| US 4445935 | A | 01-05-1984 | CA 1214334 | A | 25-11-1986 |
| | | | DE 3345022 | A1 | 14-06-1984 |
| | | | GB 2133807 | A | 01-08-1984 |
| | | | JP H0478692 | B2 | 11-12-1992 |
| | | | JP S59113133 | A | 29-06-1984 |
| | | | US 4445935 | A | 01-05-1984 |
| WO 2010143623 | A1 | 16-12-2010 | CN 102459096 | A | 16-05-2012 |
| | | | JP 5471054 | B2 | 16-04-2014 |
| | | | JP 2010284593 | A | 24-12-2010 |
| | | | WO 2010143623 | A1 | 16-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4668483 A
- EP 0122658 A
- US 4171248 A
- WO 2013060870 A

### Non-patent literature cited in the description

- **JOHNSON et al.** *Environ. Sci. Technol.,* 2006, vol. 40, 7060-7069
- **HABASHI.** Handbook of Extractive Metallurgy IV. Wiley-VCH, 1997, 1761-1811
- **ZHANG et al.** *Int.J.Miner.Process.,* 2010, vol. 95, 10-17
- **XU et al.** *Miner.Eng.,* 2005, vol. 18, 527-535
- **JIANG et al.** *Inter.J.Miner.Proc.,* 2014, vol. 130, 102-107
- **KIM et al.** International Slag Valorisation Symposium, SVS. 15 April 2015, 161-165